# EUROPÄISCHE PATENTANMELDUNG

(11) **EP 4 825 159 A1**
(43) Veröffentlichungstag der Anmeldung: **21.10.2026**
(21) Anmeldenummer: 26170367.2
(22) Anmeldetag: 02.04.2026
(51) Int. Cl.: A01G 9/02

(54) **PFLANZTOPF**

(30) Priorität: 07.04.2025 DE 202025101894 U
(71) Anmelder: Pöppelmann Holding GmbH & Co. KG, 49393 Lohne (DE)
(72) Erfinder: Wilke, Jörg, 49393 Lohne (DE)

(57) **Zusammenfassung**

Die Offenbarung betrifft einen Pflanztopf (1) mit einem Aufstellboden (5), der Flächen (11) aufweist, die stufenlos von einem randseitigen Standbereich (10) zu einer vertikalen Längsmittelachse (18) hin ansteigen und in denen der Entwässerung eines untersten Pflanztopfbereichs dienende Löcher (17) angeordnet sind. Die Ränder dieser kanalverbindungslosen Löcher (17) verlaufen jeweils in horizontalen Ebenen, die in Bezug auf die Längsmittelachse (18) einen Abstand (A) zum Standbereich von höchstens 5 mm, vorzugsweise höchstens 3 mm, weiter bevorzugt höchstens 1,5 mm haben. Die kanalverbindungslosen Löcher (17) sind jeweils in horizontalen Flächenabschnitten (19) angeordnet, die in den ansteigenden Flächen (11) eingebettet sind und an zumindest einer Stelle stufenlos in diese übergehen. Die horizontalen Flächenabschnitte (19) sind derart bemessen, dass die Löcher (17) von einem im Wesentlichen schmalen Ring (19) umgeben sind, der an der schmalsten Stelle mindestens 0,3 mm, vorzugsweise mindestens 0,75 mm breit ist.

## Beschreibung

Die vorliegende Erfindung betrifft einen Pflanztopf nach dem Oberbegriff des Anspruchs 1.

In der EP 2291070 B1 ist ein Pflanztopf dargestellt und beschrieben, der einen zur Versteifung und Entwässerung perforierten sowie profilierten Aufstellboden mit mehreren Entwässerungs- und Belüftungsebenen aufweist. Der aufstellfußlose Standbereich verläuft randseitig und ist durch Kanäle mehrteilig unterbrochen. In Flächen, die stufenlos an den Standbereich angrenzen und zu einer vertikalen Längsmittelachse ansteigen, sind Löcher für eine Entwässerung eines untersten Pflanztopfbereiches angeordnet, deren äußerer Lochrand auf einem niedrigeren Niveau als ihr innerer Lochrand liegt, wobei die Niveaudifferenz weniger als 1 mm beträgt. Durch die kanalverbindungslosen Löcher ist eine langsame Entwässerung des untersten Pflanztopfbereiches realisiert. Die Löcher weisen gegenüber Löchern, die aus Bodenflächen in Kanalseitenwände übergehen, auch keine komplexen Geometrien auf. Dennoch bedingen diese Löcher, die nur leicht schräg zur Standebene angestellt sind, einen höheren Verschleiß an den Stiften und Stiftführungen in den Spritzgusswerkzeugen, was angesichts der großen Anzahl von Löchern zu längeren Ausfallzeiten führen kann, um abgenutzte Stifte und deren Führungen zu ersetzen oder/und aufzuarbeiten.

Der vorliegenden Erfindung liegt die Aufgabe zugrunde, einen Pflanztopf der eingangs genannten Art dergestalt weiterzubilden, dass er sowohl den Anforderungen an Bewässerung und Belüftung gerecht wird als auch in weniger verschleißanfälligen Spritzgusswerkzeugen hergestellt werden kann.

Die Aufgabe wird gelöst durch einen Pflanztopf gemäß Anspruch 1, vorteilhafte Weiterbildungen der Erfindung sind den hierauf zurückbezogenen Unteransprüchen sowie der nachfolgenden Beschreibung zu entnehmen.

Bei dem erfindungsgemäßen Pflanztopf verlaufen die Ränder der kanalverbindungslosen Löcher, die sich in ansteigenden Flächen befinden, jeweils in horizontalen Ebenen, welche in Bezug auf die Längsmittelachse einen Abstand zum Standbereich von höchstens 5 mm, vorzugsweise höchstens 3 mm, weiter bevorzugt höchstens 1,5 mm haben, wodurch eine kapillare Entwässerung durch die Löcher hindurch auch aus den untersten, inneren Pflanztopfbereichen gewährleistet ist.

Die Löcher sind jeweils in horizontalen Flächenabschnitten angeordnet, die in den ansteigenden Flächen eingebettet sind und an zumindest einer Stelle stufenlos in diese übergehen. Diese horizontal angelegten Flächenabschnitte stehen senkrecht zur Entformungsrichtung und ermöglichen eine einfache und insbesondere instandhaltungsfreundliche Konstruktion der Spritzgieß- oder Thermoformzeuge. Die horizontal angelegten Flächenabschnitte gehen in einem Bereich zwischen ihren radial inneren und äußeren Begrenzungen stufenlos in die sie vollständig umgebenden, zur Längsmittelachse hin ansteigenden Flächen über. Vorzugsweise ist die Höhenlage der horizontalen Flächenabschnitte in den ansteigenden Flächen vermittelt angelegt, mit zwei seitlich der Radialen gegenüberliegenden stufenlosen Übergängen.

Die horizontalen Flächenabschnitte sind derart bemessen, dass die Löcher von einem im Wesentlichen schmalen Ring umgeben sind, der an der schmalsten Stelle mindestens 0,3 mm, vorzugsweise mindestens 0,75 mm breit ist. Der schmale Ring um die Löcher kann leicht vom aus untersten Pflanztopfbereichen kapillar abfließenden Wasser überwunden werden.

Die ansteigenden Flächen gehen zumindest abschnittsweise ohne Erhöhung in die horizontale Lochebene über, sodass das Wasser keine Absätze, Wülste oder sonstigen Hindernisse überwinden muss, sondern aus den untersten Pflanztopfbereichen leicht über die nur leicht schräg angestellten Flächen zu den Löchern gelangen kann. Die horizontal verlaufenden Ränder von insbesondere kreisrunden Löchern haben den Vorteil, dass in den Spritzgusswerkzeugen einfache Stifte zur Ausformung der Löcher verwendet werden können, deren die Gegenseite in der Spritzgussform kontaktierende Stirnflächen senkrecht zur Entformungsrichtung liegen, die parallel zur vertikalen Längsmittelachse des Pflanztopfes verläuft. Somit muss keine bestimmte Drehposition in der Führung der Stifte sichergestellt werden, die außerdem querkraftfrei erfolgt. Der konstruktive Aufwand in den Spritzgusswerkzeugen ist reduziert und deren Standzeit erhöht.

Unter einer stumpfkonischen Grundform werden Pflanztöpfe beliebigen Querschnitts verstanden, wie rund, oval, recht- oder mehreckig oder auch sich über die Höhe von rund nach eckig oder umgekehrt ändernde Querschnitte, die sich vom Boden zum Rand hin erweitern. Der klassisch runde Pflanztopf weist eine stumpfkegelige, rotationssymmetrische Grundform auf. Die Perforation des Bodens kann beliebige Querschnittsformen von Löchern, wie rund, eckig, länglich bis hin zu schlitzförmigen Öffnungen umfassen. Unter einem Aufstellboden wird ein aufstellfußloser Boden verstanden, der mit untersten Bodenbereichen unmittelbar auf einer Aufstellfläche aufsteht.

Vorzugsweise beträgt der Abstand zum Standbereich mindestens 0,3 mm, sodass eine Entwässerung durch die Löcher stattfinden kann.

In bevorzugter Weiterausgestaltung ist die Wandstärke der horizontalen Flächenabschnitte gegenüber der Wandstärke der ansteigenden Flächen zumindest im randnahen Bereich um die Löcher um wenigstens 25 %, vorzugsweise wenigstens 33 % reduziert. Durch die dünnere Wandstärke ist der Spritzdruck beim Spritzgießen um die Löcher reduziert, wobei der geringere Spritzdruck außerdem noch auf eine kleinere Fläche seitlich des Stiftes wirkt, der das Loch abformt. Die Stifte sind dadurch weniger belastet und die Löcher werden gratfrei ausgeformt. Die Reduzierung der Wandstärke kann durch eine am Lochrand ausgebildete Fase oder auch durch eine vollflächige Wandstärkenreduktion erfolgen.

In bevorzugter Weiterausgestaltung ist an die Ränder der Löcher zumindest ein Entwässerungssteg angebunden, der sich in Bezug auf die Längsmittelachse zum Standbereich erstreckt. Er verhindert Wasserlinsen und sorgt für einwandfrei entwässerte Pflanztöpfe.

In bevorzugter Weiterausgestaltung ist benachbart zum vorzugsweise inneren Lochrand zumindest ein Stützvorsprung angeformt. Der Stützvorsprung stellt bei beladenem Pflanztopf den Abstand des Lochrands zu der Aufstellfläche sicher. Der Stützvorsprung kann von dem Entwässerungssteg mit ausgebildet sein und an den Lochrand angrenzen.

Vorzugsweise steigen die ansteigenden Flächen in einem Winkel von 0,5 bis 10°, besonders bevorzugt von 2 bis 6° zur Längsmittelachse hin an.

In bevorzugter Weiterausgestaltung ist zumindest ein horizontaler Flächenabschnitt in zumindest einer der ansteigenden Flächen eingebettet, in dem ein Anspritzpunkt und/oder eine Belüftungsstelle eines Spritzgusswerkzeugs angeordnet sind. Der konstruktive Aufbau des Spritzgießwerkzeugs ist dadurch weiter vereinfacht. Die Belüftung erfolgt durch Belüftungsstifte, deren Stirnflächen senkrecht zur Entformungsrichtung stehen. Die Belüftung unterstützt das Entformen des Pflanztopfs aus dem Spritzgießwerkzeug.

Weitere Vorteile und Einzelheiten der Erfindung sind der nachfolgenden Figurenbeschreibung zu entnehmen. Einzelne technische Merkmale des nachfolgend beschriebenen Ausführungsbeispiels können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktionell gleichwirkende Elemente mit identischen Bezugsziffern versehen. Es zeigen
- Fig. 1: einen erfindungsgemäßen Pflanztopf in einer perspektivischen Ansicht auf dessen Unterseite;
- Fig. 2: einen Ausschnitt einer Schnittansicht des Bodens durch ein Loch;
- Fig. 3: einen Ausschnitt einer weiteren Schnittansicht des Bodens.

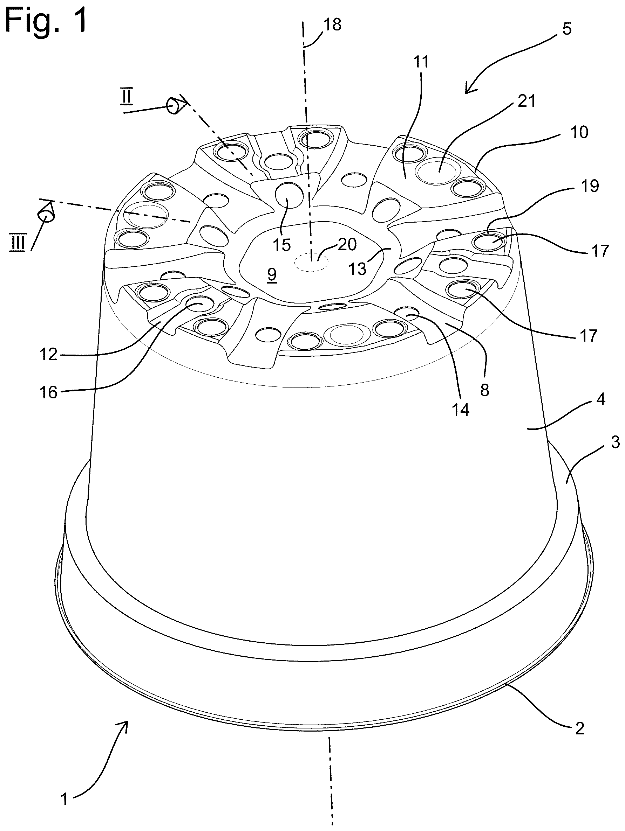

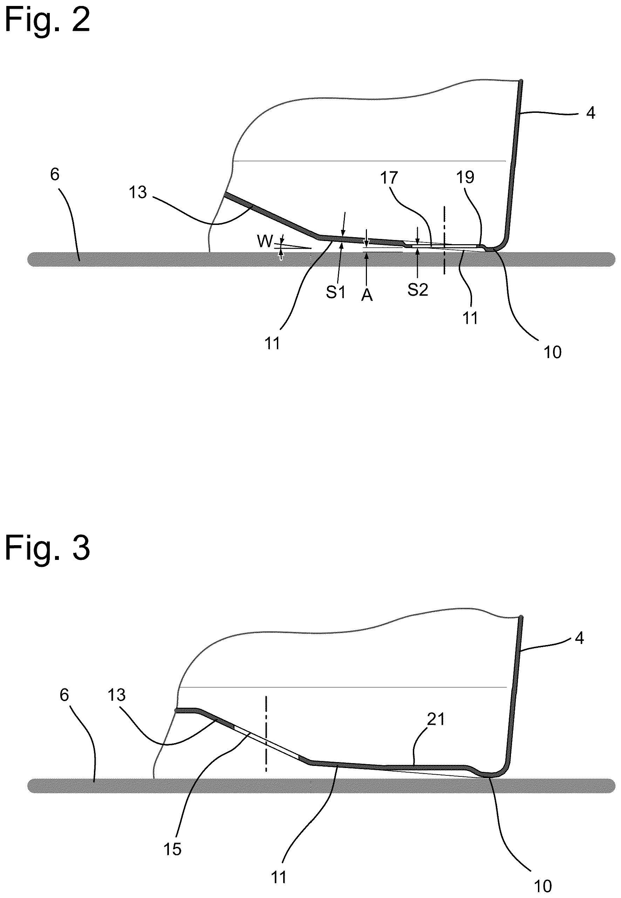

Der in Fig. 1 auf dem Kopf stehend dargestellte Pflanztopf 1 ist aus Kunststoff im Spritzgussverfahren hergestellt. Er hat eine im Wesentlichen stumpfkegelige, rotationssymmetrische Form. Sein Boden, der als Aufstellboden 5 aufstellfußlos auf einer Aufstellfläche 6 aufsteht (vgl. Fig. 2 und Fig. 3), ist profiliert und mit Löchern 14, 15, 16, 17 zur Be- und Entwässerung sowie Belüftung versehen. Die sich zum Boden hin verjüngende Form ermöglicht es, gleiche Töpfe ineinander zu schachteln und somit raumsparend zu stapeln. Eine vom Boden ausgehende Seitenwand 4 mündet in einen leicht auskragenden Topfrand 2, wobei unterhalb des Topfrands 2 noch eine radial ausgestellte Schulter 3 ausgebildet ist.

Der Boden weist einen zentralen Hohllagebereich 9 auf, der in seiner annähernd sechseckigen Ausgestaltung um eine zentrale Längsmittelachse 18 angeordnet ist und von dem aus sechs Kanäle 8 sternförmig radial nach außen laufen. Die Kanäle 8 unterteilen einen randseitigen Standbereich 10 in mehrere Abschnitte, an denen jeweils Flächen 11 stufenlos angrenzen, die vom Standbereich zu der vertikalen Längsmittelachse 18 mit einem Winkel W von 4° ansteigen, und radial innen an eine Seitenwand 13 des Hohllagebereichs 9 angrenzen. Jede zweite ansteigende Fläche 11 wird von einem Flachkanal 12 durchquert und ist dementsprechend unterteilt.

Der Pflanztopf 1 weist in der dargestellten Ausführung vier Entwässerungs- bzw. Belüftungsebenen auf. Er ist damit für unterschiedliche Bewässerungs- und Belüftungsbedingungen geeignet und ist ideal für die Nutzung bei Ebbe-/Flutbewässerung, Mattenbewässerung, Schlauchbewässerung und oberflächlicher Beregnung.

Die der Schnellentwässerung dienenden Kanäle 8 weisen in ihren Deckenbereichen Löcher 14 auf und bilden eine erste Entwässerungsebene. Eine zweite Entwässerungsebene wird durch die Seitenwände 13 und die darin befindlichen Löcher 15 ausgebildet. Als dritte Entwässerungsebene dienen die Löcher 16 in den Deckenbereichen der nur 2 mm hohen Flachkanäle 12 der kapillaren Entwässerung. Ebenso die Löcher 17 in den ansteigend angelegten Flächen 11 als vierte Entwässerungsebene.

Erfindungsgemäß verlaufen die Ränder der kanalverbindungslosen Löcher 17 jeweils in horizontalen Ebenen, und zwar in einem vertikalen Abstand A zum Standbereich von ca. 0,8 mm (Fig. 2). Die Löcher 17 befinden sich jeweils in horizontalen Flächenabschnitten, die in den ansteigenden Flächen 11 vollständig von diesen umschlossen eingebettet sind. Die Flächenabschnitte gehen an zwei Stellen seitlich einer Radialen durch das jeweilige Loch stufenlos in die Flächen 11 über. Der sich durch die Löcher 17 in dem Flächenabschnitt ergebende horizontale Ring 19 ist lediglich 1 mm breit. Außerdem ist die Wandstärke S2 von dem Ring 19 nur etwa halb so dick wie die Wandstärke S1 der angrenzenden Fläche 11.

In den ansteigend angelegten Flächen 11, die keinen Flachkanal 12 aufweisen, sind stattdessen jeweils undurchlöcherte horizontale Flächenabschnitte 21 eingebettet, in denen Belüftungsstellen des Spritzgusswerkzeugs angeordnet sind, mit denen das Entformen des Pflanztopfs durch Einblasen von Luft unterstützt wird. Die Belüftungsstellen werden im Spritzgusswerkzeug durch kreisrunde Belüftungsstifte realisiert, die vergleichbar zu den Stiften zum Abformen der kreisrunden Löcher 17 orthogonal zur Entformungsrichtung stehende Stirnflächen aufweisen und die daher nicht in einer definierten Drehposition geführt werden müssen. Die Flächenabschnitte 21 eignen sich insbesondere auch als alternative Anspritzpunkte zum Anspritzpunkt 20, der im Ausführungsbeispiel zentral im Hohllagebereich 9 liegt.

### Bezugszeichenliste

| | | | |
|---|---|---|---|
| 1 | Pflanztopf | 14 | Loch |
| 2 | Topfrand | 15 | Loch |
| 3 | Schulter | 16 | Loch |
| 4 | Seitenwand | 17 | Loch |
| 5 | Aufstellboden | 18 | Längsmittelachse |
| 6 | Aufstellfläche | 19 | Ring |
| 8 | Kanal | 20 | Anspritzpunkt |
| 9 | Hohllagebereich | 21 | Flächenabschnitt |
| 10 | Standbereich | W | Winkel |
| 11 | Fläche | S1 | Wandstärke |
| 12 | Flachkanal | S2 | Wandstärke |
| 13 | Seitenwand | A | Abstand |

## Patentansprüche

1. **Pflanztopf** (1) aus dünnwandigem Kunststoff, in einer generell stumpfkonischen, vorzugsweise stumpfkegeligen Grundform, mit einer Seitenwand (4) und mit einem zur Versteifung und Entwässerung perforierten und profilierten Aufstellboden (5), der Flächen (11) aufweist, die stufenlos von einem randseitigen, insbesondere mehrteiligen Standbereich (10) zu einer vertikalen Längsmittelachse (18) hin ansteigen und in denen der Entwässerung eines untersten Pflanztopfbereichs dienende Löcher (17) angeordnet sind, **dadurch gekennzeichnet, dass** die Ränder der kanalverbindungslosen Löcher (17) jeweils in horizontalen Ebenen verlaufen, die in Bezug auf die Längsmittelachse (18) einen Abstand (A) zum Standbereich von höchstens 5 mm, vorzugsweise höchstens 3 mm, weiter bevorzugt höchstens 1,5 mm haben, wobei die kanalverbindungslosen Löcher (17) jeweils in horizontalen Flächenabschnitten (19) angeordnet sind, die in den ansteigenden Flächen (11) eingebettet sind und an zumindest einer Stelle stufenlos in diese übergehen, und wobei die horizontalen Flächenabschnitte (19) derart bemessen sind, dass die Löcher (17) von einem im Wesentlichen schmalen Ring (19) umgeben sind, der an der schmalsten Stelle mindestens 0,3 mm, vorzugsweise mindestens 0,75 mm breit ist.

2. Pflanztopf nach Anspruch 1, **dadurch gekennzeichnet, dass** der Abstand (A) mindestens 0,3 mm beträgt.

3. Pflanztopf nach Anspruch 1 oder 2, **dadurch gekennzeichnet, dass** die Wandstärke (S2) der horizontalen Flächenabschnitte (19) gegenüber der Wandstärke (S1) der ansteigenden Flächen (11) zumindest im randnahen Bereich um die Löcher (17) um wenigstens 25 %, vorzugsweise wenigstens 33 % reduziert ist.

4. Pflanztopf nach einem der Ansprüche 1 bis 3, **dadurch** g**ekennzeichnet**, dass an die Ränder der Löcher zumindest ein Entwässerungssteg angebunden ist, der sich in Bezug auf die Längsmittelachse zum Standbereich erstreckt.

5. Pflanztopf nach einem der Ansprüche 1 bis 4, **dadurch gekennzeichnet, dass** benachbart zum vorzugsweise inneren Lochrand zumindest ein Stützvorsprung angeformt ist.

6. Pflanztopf nach einem der Ansprüche 1 bis 5, **dadurch gekennzeichnet, dass** die ansteigenden Flächen (11) in einem Winkel (W) von 0,5 bis 10°, vorzugsweise von 2 bis 6° ansteigen.

7. Pflanztopf nach einem der Ansprüche 1 bis 6, **dadurch gekennzeichnet, dass** zumindest ein horizontaler Flächenabschnitt (21) in zumindest einer der ansteigenden Flächen (11) eingebettet ist, in dem ein Anspritzpunkt und/oder eine Belüftungsstelle eines Spritzgusswerkzeugs angeordnet sind.
